Europäisches Patentamt

European Patent Office

Office européen des brevets

(19)

(11) Publication number: **0 023 821**
**A2**

## EUROPEAN PATENT APPLICATION

(12)

(21) Application number: **80302613.7**

(51) Int. Cl.³: **G 11 C 29/00**

(22) Date of filing: **31.07.80**

(30) Priority: **01.08.79 JP 98268/79**

(43) Date of publication of application: **11.02.81**
**Bulletin 81/6**

(84) Designated Contracting States: **AT BE CH DE FR GB IT LI LU NL SE**

(71) Applicant: **FUJITSU FANUC LIMITED, 5-1, Asahigaoka, 3-chome, Hino-shi, Tokyo 191 (JP)**

(72) Inventor: **Imazeki, Ryoji, 987-44, Naganuma-cho, Hachioji-shi Tokyo (JP)**
Inventor: **Inoue, Michiya, 28-6, Nishihirayama, 5-chome, Hino-shi Tokyo (JP)**

(74) Representative: **Bedggood, Guy Stuart et al, Haseltine Lake & Co. Hazlitt House 28 Southampton Buildings Chancery Lane, London WC2A 1AT (GB)**

(54) **Apparatus and method for checking a memory and a computer system including a memory and apparatus for checking the memory.**

(57) A processor 3 reads the words of a logical block, e.g. BL$_i$, from memory, e.g. RAM2, and checks the block by operating on the words and comparing the result with a predetermined value.

For example, processor 3 performs exclusive OR operations between homologous bits of a word $W_1$, $W_2$, $W_3$, $W_4$, OCW$_i$, and contents of a register 3c and sets the resultant in register 3c. Initially register 3c holds all «O»s. When first word $W_1$ is «01001010» the resultant set in register 3c is «01001010». Homologous bits of this resultant and second word $W_2$ are exclusive OR-ed to give «11100000» in register 3c. Similar operations are effected for $W_3$, $W_4$ and OCW$_i$. If block BL$_i$ checks correctly a predetermined result «00000000» is found in register 3c.

Word OCW$_i$ is an operational control word provided in block BL$_i$, when words $W_1$ to $W_4$ are stored, to ensure that the predetermined result will be arrived at in the case of correct checking.

| | CONTENTS OF EACH WORD | | | | | | | |
|---|---|---|---|---|---|---|---|---|
| $W_1$ | 0 | 1 | 0 | 0 | 1 | 0 | 1 | 0 |
| $W_2$ | 1 | 0 | 1 | 0 | 1 | 0 | 1 | 0 |
| $W_3$ | 0 | 0 | 0 | 0 | 0 | 1 | 0 | 1 |
| $W_4$ | 1 | 1 | 0 | 1 | 1 | 1 | 0 | 1 |
| OCW$_i$ | 0 | 0 | 1 | 1 | 1 | 0 | 0 | 0 |

| OPERATION STEP | CONTENTS OF OPERATIONAL REGISTER 3C | | | | | | | |
|---|---|---|---|---|---|---|---|---|
| STEP 1 | 0 | 1 | 0 | 0 | 1 | 0 | 1 | 0 |
| STEP 2 | 1 | 1 | 1 | 0 | 0 | 0 | 0 | 0 |
| STEP 3 | 1 | 1 | 1 | 0 | 0 | 1 | 0 | 1 |
| STEP 4 | 0 | 0 | 1 | 1 | 1 | 0 | 0 | 0 |
| STEP 5 | 0 | 0 | 0 | 0 | 0 | 0 | 0 | 0 |

-1-

APPARATUS AND METHOD FOR CHECKING A MEMORY
AND A COMPUTER SYSTEM INCLUDING A MEMORY AND
APPARATUS FOR CHECKING THE MEMORY.

This invention relates to apparatus and method for checking a memory, and a computer system including a memory and apparatus for checking the memory.

It is general practice in systems that require a high reliability to perform a check of read-out information, for example by a parity check procedure, in order to prevent erroneous system operation which could occur if false information were read out of a memory because of a malfunctioning memory element or because of some other problem.

Generally, parity checking proceeds in the manner outlined below, but it should first be noted that a parity bit generating circuit and a parity check circuit are required, and that these are provided for in the computer processor of the system concerned. When data is written, the parity generating circuit forms a parity bit for each data word which is to be stored in a memory, and causes the parity bit to be stored in a prescribed region of the memory. When the data is read out from the memory, the parity check circuit executes a parity check for each word which is read out.

Thus, when data from the processor is written in a memory, the parity bit generating circuit forms a parity bit, in accordance with odd or even parity, and writes the parity bit in a prescribed region of the memory which shares the same address as the data. Then, when the

0023821

-2-

processor designates that address and the data is read out, the parity check circuit checks the parity of the read out data and issues an alarm if an error is detected. When this occurs the processor is interrupted by a well known means.

In general, instruction words handled by a generally available micro-processor are each composed of eight bits. This means that the number of bits which make up one word is, in effect, increased to nine, since one bit must be added to each eight bit word as a parity bit for use in parity checking.

On the other hand, in numerical control apparatus a read-only memory is used to store permanent data such as a program for numerical control and is almost always constructed as an eight bit memory. That is to say, the read-only memory is composed of 8 x $\underline{n}$ bits.

It will thus be apparent that it is necessary to use the read-only memory (8 x $\underline{n}$ bits) and a memory element constructed of 1 x $\underline{n}$ bits, wherein the read-only memory is used for storing instruction words and the memory element is used for storing parity bits. However, a memory element of 1 x $\underline{n}$ bits is not available. For this reason, it is inevitable that the read-only memory will have to provide a substitute for a memory element of 1 x $\underline{n}$ bits and much hardware is required to put this substitution into effect.

Also, it is obvious that 1/9 of the memory capacity available is employed for parity check purposes, a fact which does not allow the memory capacity to be used to the fullest possible extent. Moreover, in a comparatively small-scale system, the hardware necessary for generating parity bits and for checking parity bits can account for a significant part of the total hardware.

According to the present invention there is provided apparatus for checking a memory that stores at least one logical block made up of a plurality of words, the or each block in the memory including, if necessary, an operational control word/for checking purposes, the apparatus including
or words

means for reading out each word of a logical block from the memory, means for subjecting each successive word of the block to a prescribed operation, the operational control word, or words if present, being such that the result of the operations on the successive words of the block should normally have a predetermined value if the contents of the logical block check correctly, and means for determining whether or not the result of the operations on the successive words has the predetermined value.

According to the present invention there is provided a method of checking the contents of a memory that stores at least one logical block made up of a plurality of words, the or each block in the memory including, if necessary, an operational control word or words for checking purposes, the method comprising:-

reading out each word of a logical block from the memory,

subjecting each successive word of the block to a prescribed operation,

obtaining a result of the operations on the successive words and comparing that result with a predetermined value, identity of the result and the predetermined value being taken to indicate that the contents of the logical block check correctly,

the operational control word or words if present, being such that the result of the operations on the successive words of the block should normally have the predetermined value if the contents of the logical block check correctly.

The present invention can afford a reduction in the size of a memory region which is required for memory inspection and checking purposes in a data processing unit which uses a read-only memory as main storage, and can thereby permit more effective utilization of memory capacity.

The present invention provides for memory checking without the necessity for a parity bit generating circuit, a parity check circuit and hardware which substitutes a read-only memory for a memory constructed of 1 x $\underline{n}$ bits,

thereby reducing the amount of hardware required for inspection of the memory.

The present invention provides for memory checking through provision for the incorporation, as required, of operational control word or words in a logical block consisting of a plurality of words, for execution of a predetermined operation in connection with each word in the logical block, and for judgement as to whether or not the result of the operation is the same as a predetermined value.

The present invention provides for memory checking through provision for determination of an operational control word or words in such a manner that the result of an operation attains a specified value, such as all "O"s, when a predetermined operation is executed in connection with each word or words in a logical block, and for insertion of the operational control word into the logical block.

The present invention provides in particular for checking of a memory such as a read-only memory (ROM) or a memory for both read and write operations but which is used primarily for reading only.

Reference will be made, by way of example, to the accompanying drawings, in which:-

Fig. 1 is a schematic block diagram useful in describing memory checking by means of conventional parity check operation;

Fig. 2 is a simplified schematic block diagram useful in describing the execution of memory checking in accordance with the present invention;

Fig. 3A is a tabular diagram illustrating a case in which one logical block consists of five words, and shows the content of each of words $W_1$ to $W_4$ and the content of an operational control word $OCW_i$ determined in accordance with the present invention;

Fig. 3B is a tabular diagram illustrating, in correspondence to Fig. 3A, relationships between operational steps and the contents of an operational register 3C (see Fig. 2) in the course of a memory check in an embodiment of the present invention;

Fig. 4A is a tabular diagram illustrating the contents of words $W_1$ to $W_4$ in a logical block which consists of five words for illustration of operational code word generation in accordance with the present invention;

Fig. 4B is a tabular diagram illustrating, in correspondence to Fig. 4A, relationships between operational steps and the contents of operational register 3c when an operational control word is generated in accordance with the present invention; and

Fig. 5 is a block diagram of a processor of an embodiment of the present invention.

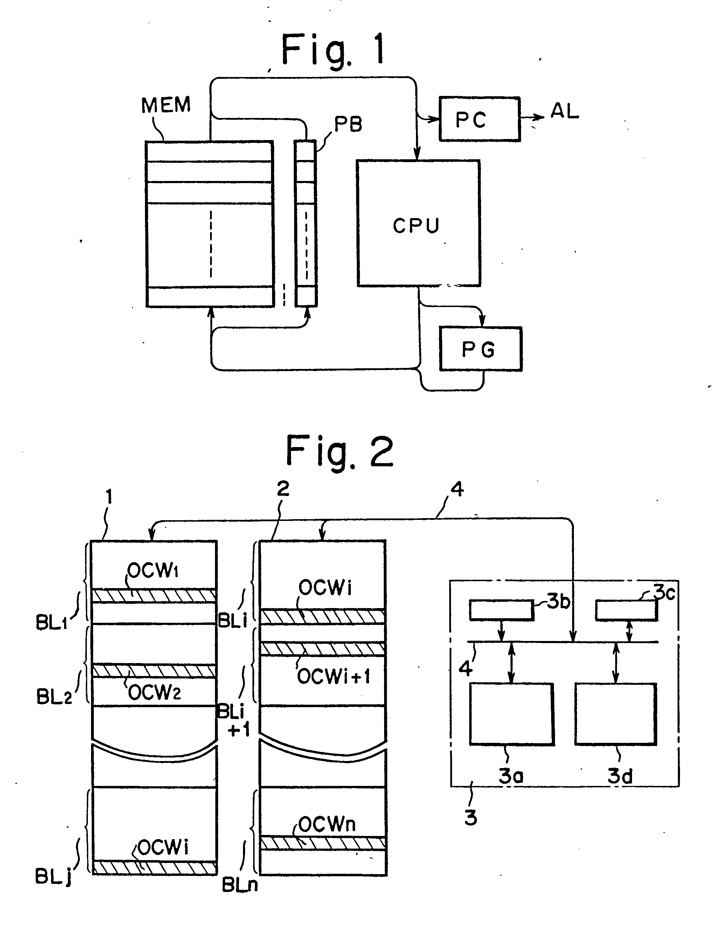

Conventional parity checking can be understood from Fig. 1. Illustrated in the Figure are a central processing unit CPU, a parity bit generating circuit PG, a memory MEM, a parity bit memory region PB, and a parity check circuit PC. In this system the central processing unit CPU is provided with the parity bit generating circuit PG and parity check circuit PC. When data is to be written in the memory MEM, the parity bit generating circuit PG generates a parity bit for each word to be stored in the memory MEM, and causes the parity bit to be stored in the parity bit memory region PB. The parity check circuit executes a parity check when data is read out from the memory MEM.

More specifically, when data from the central processing unit CPU is written in the memory MEM, the parity bit generating circuit PG generates a parity bit in accordance with odd or even parity, and writes the parity bit in a region of parity bit memory PB having the same address as the region of memory MEM into which the data is written. When data is read out from a region of the memory MEM whose address has been designated by the central processing unit CPU, the parity check circuit checks this data and is so adapted as to issue an alarm if the data is erroneous. An interrupt signal is then sent to the central processing unit by known means.

For even parity, in a conventional method, a parity bit is generated and added to a word of data so as to make even the total number of "1" bits in that one word of data. Thus, if the number of "1" bits in a data word is odd, a parity bit of "1" is generated and added to the data word, and if the number of "1" bits is even, a parity bit of "0" is generated and added to the data word. Conversely, for odd parity, a parity bit is generated, and added to one word of data, so as to make odd the total number of "1" bits in that word. If the number of "1" bits is odd, a parity of "0" is generated and added to the word, and if the number of "1" bits is even, a parity bit of "1" is generated and added to the word.

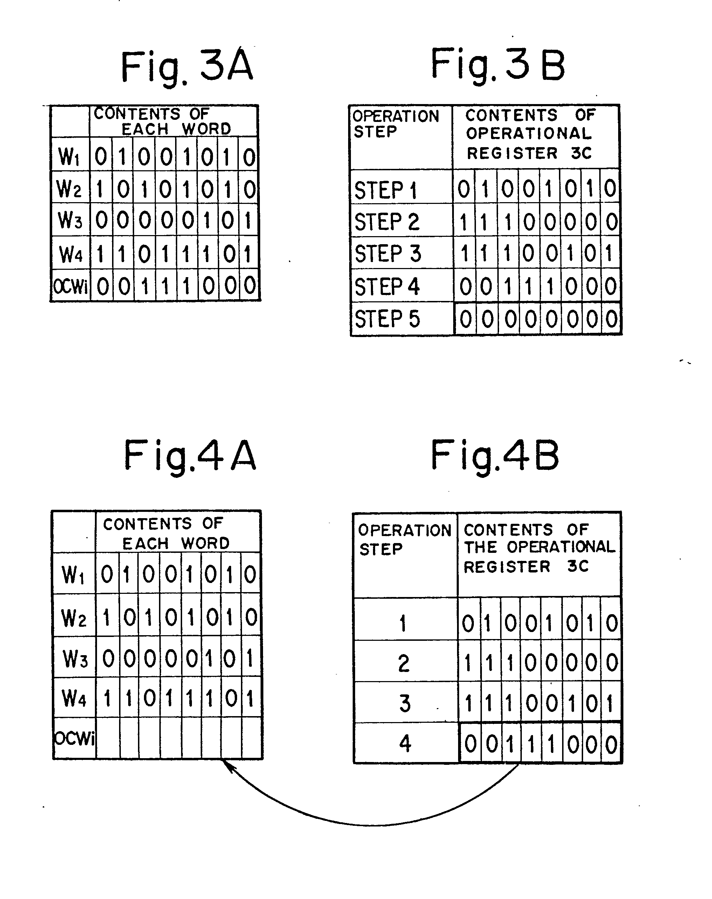

By contrast, memory checking in accordance with the present invention is illustrated simply in Fig. 2. The illustrated system includes a read-only memory (ROM) 1 for storing a control program or the like, a random access memory (RAM) 2 which stores data such as machining data for numerical control and which is used primarily for a read-only operation, a processor 3, and a common bus line 4.

The read-only memory 1 and random access memory 2 store one or more logical blocks each made up of a plurality of words.

In the illustrated case the read-only memory 1 stores logical blocks $BL_1$ to $BL_j$, and the random access memory 2 stores logical blocks $BL_i$ to $BL_n$.

$OCW_i$ to $OCW_n$ denote operational control words for adjusting the results of operations, as will be described later. These words are inserted in the appropriate logical blocks as necessary.

The processor 3 includes an operational unit 3a, operational registers 3b, 3c, and a control unit 3d, and is adapted to execute a predetermined operation in relation to each word that makes up a logical block, such a word being read out from the read-only memory 1 and/or random access memory 2, and to check the memory by determining whether or not the result of such operations is equivalent to a predetermined specified value.

The predetermined operation referred to above can be an arithmetical operation such as addition or subtraction, a logical operation such as an AND, OR or exclusive-OR operation, or any suitable combination of these operations. The specified value mentioned above can be, for example, all "0"s or all "1"s.

If operational control words were not present, the result of the predetermined operations applied successively to each word in a logical block would not, generally, be equivalent to the specified value, such as all "0"s. The operational control words $OCW_1$ to $OCW_n$ are determined so as to make the result of the operations on the words of the blocks $BL_1$ to $BL_n$ all "0"s for each block. The operational control words so determined are then written in the read-only memory 1 and/or the random access memory 2 at the same time as the other information.

Before memory checking in accordance with the invention is described, it will be assumed that $\underline{m}$ 8-bit words are stored in each logical block $BL_1$ to $BL_n$, that the specified value mentioned above is all "0"s for the eight bits, and that the operation performed by the central processing unit on each read-out word is a logical operation, namely an exclusive-OR operation performed sequentially on the words which make up a logical block.

To effect memory checking in accordance with this invention, the processor 3, making use of idle time, first reads out sequentially from the read-only memory 1 each word that forms logical block $BL_1$, and performs a prescribed operation. Thus the first word $W_1$ is read out from the logical block $BL_1$ and set in the operational register 3b. Next, the operational unit 3a takes the exclusive OR between corresponding (homologous) bits of the contents of the operational registers 3b, 3c (the content of operational register 3c initially being all "0"s), and the result of this operation is stored in operational register 3c. In this way the first word $W_1$ is set in the operational register 3c. Next, the second

word $W_2$ is read out and set in operational register 3b in the manner described above, the operational unit 3a takes the exclusive OR between corresponding bits in the contents of the operational registers 3b, 3c, and the result of the operation is again stored in the operational register 3c. Thereafter, and in the same fashion, the third word $W_3$, the fourth word $W_4$ and eventually, the $\underline{m}$-th word $W_m$ are read out sequentially, exclusive-OR operation is executed for corresponding bits in the operational registers 3b, 3c and the results of the operations are set in the operational register 3c. After the $\underline{m}$-th word $W_m$ has been operated upon, a determination is made as to whether the content of operational register 3c is all "0"s; if it is, the content of the register is cleared, the words comprising the next logical block $BL_2$ are read out sequentially, and each word is processed as described above. If the result of a series of operations is not all "0"s, however, this is determined to represent an error.

It should be noted that when exclusive-OR operations are applied successively to each bit in the words that constitute a logical block (i.e. to corresponding bits in successive words), as in the above case, the number of corresponding "1" bits in all words $W_1$ to $W_m$ will be either odd or even in number.(i.e. the total number of "1" bits in a succession of corresponding bits will be odd or even in number). If even, the corresponding bit in the result of the operation will be a "0"; if odd, the corresponding bit in the result will be a "1".

Memory checking in accordance with the present invention will be understood more clearly from the drawings of Figs. 3A and 3B. Fig. 3A is an example in which a block comprises five words, and shows the content of four words $W_1$ to $W_4$, and the content of the fifth word, which is an operational control word $OCW_i$. Fig. 3B illustrates the corresponding relationships between operational steps and the contents of the operational register 3c when exclusive-OR operations are executed.

When the first word $W_1$ (01001010) is read out and then set in the operational register 3b of Fig. 2, the operational unit 3a takes the exclusive OR between corresponding bits in the content of operational register 3b and in the content (initially all "0"s) of operational register 3c, and sets the result of the operation i.e. (01001010), in the operational register 3c. This completes Step 1 in Fig. 3B. Next, and in identical fashion, the second word $W_2$ (10101010) is read out and set in operational register 3b, after which the operational unit 3a takes the exclusive OR between corresponding bits in the contents of operational registers 3b, 3c (the content of the latter register being the result 01001010 of the preceding operation), and then sets the result of the operation i.e., (11100000), in the operational register 3c. This completes Step 2 in Fig. 3B. This process continues until each word has been read out and each bit of each word has been subjected to the exclusive-OR operation. If the memory is free of errors, the content of the operational register 3c will be all "0"s, as shown in Step 5 of Fig. 3B, after the last word in the logical block has been processed. The memory is erroneous if the content of operational register 3c is not all "0"s.

The foregoing description relates to the memory check procedure, but exactly how the operational control words (e.g. the last words in the logical blocks) are generated and written takes place as follows. To simplify the description, however, it will be assumed that one logical block consists of $\underline{m}$ words.

When the words $W_1$, $W_2$ ... constituting each of the logical blocks $BL_i$, $BL_{i+1}$... $BL_n$ are written in the random access memory 2, the processor 3 takes the exclusive OR between corresponding bits in each word sequentially. Thus the first word $W_1$, at the same time that it is written in the random access memory, is set in operational register 3b. The processor takes the exclusive-OR between corresponding bits of the word $W_1$ in the content of operational register 3b and in the content of operational register 3c (whose content is initially all "O"s), and sets the result in operational register 3c. The second word $W_2$, when it is written in the random access memory, is likewise set in the operational register 3b, the processor takes the exclusive-OR between corresponding bits in this operational register and in operational register 3c, and the result is again set in operational register 3c. The processing continues in exactly the same manner up to the $(m-1)$th word $W_{m-1}$. After this word has been written in the random access memory and subjected to exclusive-OR operations with the result of the immediately preceding operation, the writing of data in the logical block $BL_i$ will be complete if the content of the operational register 3c at this time is written in logical block $BL_1$ as the operational control word $OCW_i$. Thereafter, processing each logical block in exactly the same manner sets an operational control word at the end of each block, all of such blocks being written in the random access memory 2.

Figs. 4A and 4B are useful in describing the generation of operational control words in accordance with the present invention. Fig. 4A shows the contents of four words $W_1$ to $W_4$ in a block of five words. Fig. 4B illustrates the corresponding relationships between operational steps and the contents of the operational register 3c when exclusive-OR operations are executed.

The first word $W_1$ (01001010), at the same time as it is written in the random access memory 2 of Fig. 2, is set in operational register 3b. The processor takes the exclusive-OR between corresponding bits of the word $W_1$ in the content of operational register 3b and in the content (initially 00000000, i.e., all "O"s) of operational register 3c, and sets the result, which is 01001010, in the operational register 3c. This completes step 1 in Fig. 4B. Next, and in the same manner, the second word $W_2$ (10101010) is set in register 3b at the same time that it is written in the random access memory, the processor takes the exclusive-OR between correspond-

ing bits of word $W_2$ in the content of operational register 3b and in the content (now 01001010, i.e., the result of the immediately preceding operation) of operational register 3c, and sets the result, which is 11100000, in the operational register 3c. This completes Step 2 in Fig. 4B. Thereafter, if each word is operated upon in the above manner as it is written into the random access memory, the content of the operational register 3c will be 00111000 after the fourth word $W_4$ has been processed (Step 4 of Fig. 4B). It is this 8-bit content of the operational register 4B that is written into the random access memory 2 as the operational control word $OCW_i$ for example.

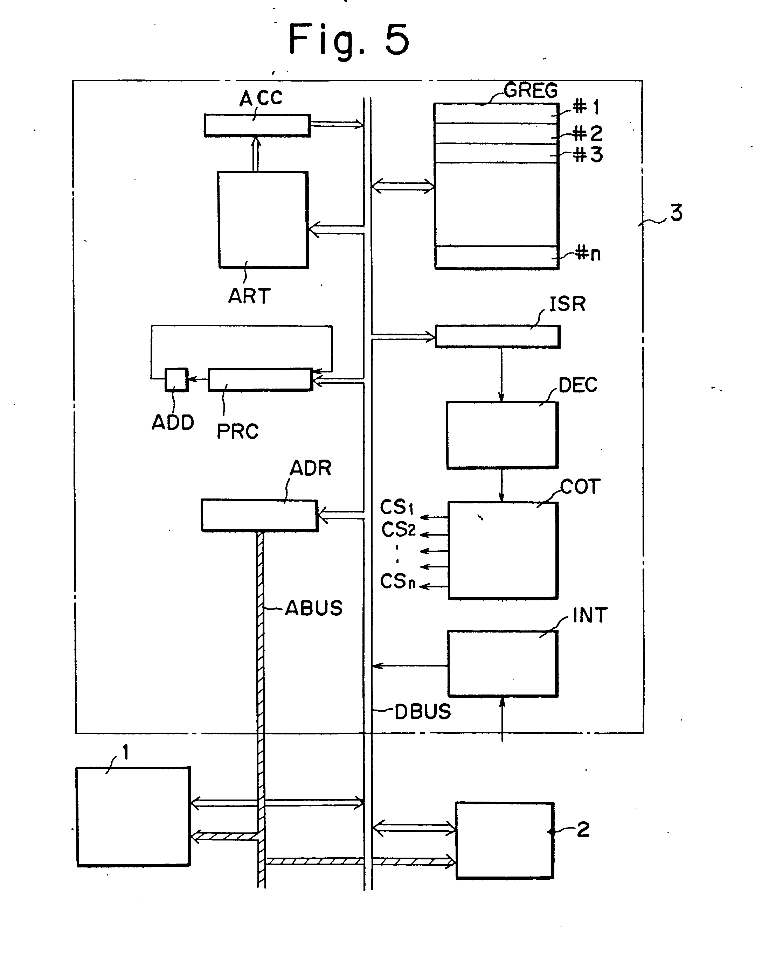

A block diagram of a processor putting into practice memory checking according to the present invention is shown in Fig. 5. In addition to the processor, designated at numeral 3, the diagram shows the read-only memory ROM 1, and the random access memory RAM 2.

In the processor 3, GREG denotes a general purpose register composed of registers ✕1 to ✕ n for storing the results of operations, indices and the like. An operational unit ART, corresponding to the operational unit 3a in Fig. 2, executes operations such as addition or subtraction or an exclusive-OR operation on corresponding (homologous) bits that make up words. ACC is an accumulator for temporarily storing the results of operations. ADR is an address register for storing a memory address from which data is read out or into which data is written and for delivering the address to the address bus ABUS. PRC is a program counter which stores the address of the next instruction word and ADD is an adder. The adder ADD increments the content of the program counter PRC by one step each time an instruction is executed. The content of the program counter PRC is capable of being changed by an instruction word, for example by a jump instruction. ISR denotes an instruction register into which are set instruction words read out from ROM 1 or RAM 2, the instruction words arriving on the data bus DBUS. DEC is a decoder which decodes an instruction word in ISR and delivers the decoded result to a control circuit COT. The latter circuit produces control signals $CS_i$ ($i = 1, \ldots n$) in accordance with the instruction word concerned on the basis of the decoded result from the decoder DEC, and causes a unit, such as the operational unit ART, to execute an operation in accordance with the instruction word.

When the computer power source is turned on, the processor 3 is placed under the control of the memory check program stored in the read-only memory 1 and executes a memory check. Specifically, when the power is turned on, the first address in the ROM 1 is set in the program counter PRC. As a result, the data stored at the first address of ROM 1 is read out from the memory and stored temporarily in register ※1, which corresponds to the operational register 3b of Fig. 2. Next, operational unit ART takes the exclusive-OR between corresponding respective ones of the bits in the content of register ※1 and in the contentof register ※2 (initially all "0"s) which corresponds to the operational register 3c in Fig. 2. The result of this operation is set in register ※2, and the content of register ※3 (initially all "0"s) is advanced by one. The content of register ※3 is then compared with the value m to determine whether or not they are the same. The content of the program counter PRC also is incremented by one by the adder ADD. Thereafter, and in similar fashion, the data at the second, third ... mth addresses ※2, ※3 ... ※m in ROM 1 is read out under the control of the memory check program, corresponding ones of the bits in the read-out words are subjected to exclusive-OR operations, the contents of register ※3 incremented by successive ones, and its content is compared with m to determine if they are identical. When they are identical, a determination is made as to whether the content of register ※2 is all "0"s). If it is, the content of register ※3 is cleared and the above-said memory check operation is executed in identical fashion for the next logical block. If the content of register ⚹ 2 is not all "0"s, an alarm is issued immediately.

The entire memory of ROM 1 is checked for errors in the manner described above and, when the check is completed, RAM 2 is subjected to the memory check in the same fashion. The process is completed when each block in ROM 1 and RAM 2 has been checked.

The operational control words are generated by starting an operational control word generating program at the time when the data is written in the particular memory concerned. Operational control words are incorporated beforehand in the control program of read-only memory ROM 1, and operational control words are generated only when machining program data is written in RAM 2. In such case the operational control word generating program is stored in ROM 1.

In the case described above the memory check was initiated when the power source was turned on, but it is also possible to utilize idle time of the processor to effect the memory check. If the amount of such idle is short, then the idle time would be utilized to check the memory block by block in order; a greater amount of idle time would permit the memory to be checked for all the blocks at once. It should be noted, however, that the most preferable method is to confirm the correctness of the memory by performing the memory check at the time that the power source is turned on.

It should be apparent from the foregoing that the present invention enables a memory check through the incorporation of operational control words as necessary in logical blocks each composed of a plurality of words, executing a prescribed operation in connection with each word of the logical blocks, and determining whether or not the result of the operation is the same as a predetermined value. Thus, it is not necessary to add a check bit to each word in a logical block; instead, it suffices merely to prepare a single operational control word for each single logical block, thereby minimizing the

0023821

regions of the memory that are used exclusively for the memory check, the result being more effective utilization of memory capacity. A separate processor exclusively for the memory check is not necessary. Hence a single processor can be employed for both the memory check and for any other operations, such as a numerical control operations, and the memory check can be conducted using idle time, or just after the power source has been turned on. The result is greater economy without an increase in hardware.

While the present invention has been described and illustrated for a case in which each logical block is composed of $m$ words, the number of words in each block need not be the same. Moreover, while the words in each logical block were described as being physcially interconnected, this need not always be the case. However, such interconnection is preferable since it is generally required to know the location of the defective memory device whenever a defect in the memory is discovered. In addition, it is advantageous if the size of a logical block is made to agree with the length of an address region of the memory device in use. For example, for a 16K bit (8 bit x 2 kW) ROM, a single operational control word will suffice, if the size of the logical block is equal to 2K bytes.

It should also be noted that the present invention is not limited to the case described above where it was described that an operational control word is incorporated in each block. It is not necessary to insert a logical control word in a logical block that provides a specified operational result even if the block has not been furnished with an operational control word. Moreover, the present invention is not limited to the above described case where only one operational control word was inserted in each logical block, for example two operational control words may be inserted if desired.

Thus, in accordance with the present invention a computer system includes a memory that stores at least one logical block composed of a plurality of words, and a processor that retrieves data from the memory to perform a memory check. An operational control word is inserted into a logical block in advance, each word in the logical block is sequentially subjected to prescribed operation, such as an exclusive-OR operation applied to corresponding bits in each word, and then it is determined whether or not the result of the sequence of operations is the same as a predetermined value. The operational control word before being inserted into the logical block, is determined in such a manner that the result of the operation will be equivalent the predetermined value, such as all "O"s.

CLAIMS

1. Apparatus for checking a memory that stores at least one logical block made up of a plurality of words, the or each block in the memory including, if necessary, an operational control word for checking purposes, the or words apparatus including means for reading out each word of a logical block from the memory, means for subjecting each successive word of the block to a prescribed operation, the operational control word if present, being or words such that the result of the operations on the successive words of the block should normally have a predetermined value if the contents of the logical block check correctly, and means for determining whether or not the result of the operations on the successive words has the predetermined value.

2. Apparatus as claimed in claim 1, further including means for providing the or each block, when stored into the memory with such an operational control word or words.

3. Apparatus as claimed in claim 1 or 2, wherein one logical block occupies the whole of a memory device making up the said memory, so that only one operational control word, if necessary, is included in the memory device.

4. A computer system including a memory, that stores at least one logical block made up of a plurality of words, the or each block in the memory including, if necessary, an operational control word or words for checking purposes, and apparatus arranged for checking the memory, the apparatus including means for reading out each word of a logical block from the memory, means for subjecting each successive word of the block to a prescribed operation, the operational control word, if present, being such that or words the result of the operations on the successive words of the block should normally have a predetermined value if the contents of the logical block check correctly, and means for determining whether or not the result of the operations on the successive words has the predetermined value.

5. A computer system as claimed in claim 4, wherein the apparatus further includes means for providing the
or each block, when stored into the memory with such an
operational control word or words.

6.    A computer system as claimed in claim 4 or 5,
adapted so that one logical block occupies the
whole of a memory device making up the said memory,
so that only one operational control word, if
necessary, is included in the memory device.

7.    A method of checking the contents of a memory that
stores at least one logical block made up of a
plurality of words, the or each block in the memory
including, if necessary, an operational control word or words
for checking purposes, the method comprising:-

      reading out each word of a logical block from
the memory,

      subjecting each successive word of the block to a
prescribed operation,

      obtaining a result of the operations on the
successive words and comparing that result with a
predetermined value, identity of the result and the
predetermined value being taken to indicate that the
contents of the logical block check correctly,
                              or words
      the operational control word if present, being
such that the result of the operations on the successive
words of the block should normally have the predetermined
value if the content of the logical block check correctly.

8.    A method as claimed in claim 7, further
comprising:-

      providing the or each block, when stored into the
                                      or words
memory, with such an operational control word if
necessary.

9.    A method as claimed in claim 7 or 8, wherein one
operational control word is provided, if necessary,
in respect of the whole contents of a memory device,
the memory device being taken up by a single logical
block.

10.   Apparatus as claimed in claim 1, 2 or 3,
or a computer  system as claimed in claim 4, 5 or 6, or a
method as claimed in claim 7, 8 or 9, wherein the

**0023821**

prescribed operation involves arithmetical and/or logical operations (e.g. exclusive OR) effected between homologous bits of a word of a block and the resultant of such operations on previous words of the block (in the case of the first word of the block the resultant is taken to be, for example, a word consisting of "O" bits), the said predetermined value being, for example, a word consisting of "O" bits.

0023821

$\frac{1}{3}$

Fig. 1

Fig. 2

## Fig. 3A

| | CONTENTS OF EACH WORD | | | | | | | |
|---|---|---|---|---|---|---|---|---|
| W1 | 0 | 1 | 0 | 0 | 1 | 0 | 1 | 0 |
| W2 | 1 | 0 | 1 | 0 | 1 | 0 | 1 | 0 |
| W3 | 0 | 0 | 0 | 0 | 0 | 1 | 0 | 1 |
| W4 | 1 | 1 | 0 | 1 | 1 | 1 | 0 | 1 |
| OCWi | 0 | 0 | 1 | 1 | 1 | 0 | 0 | 0 |

## Fig. 3B

| OPERATION STEP | CONTENTS OF OPERATIONAL REGISTER 3C | | | | | | | |
|---|---|---|---|---|---|---|---|---|
| STEP 1 | 0 | 1 | 0 | 0 | 1 | 0 | 1 | 0 |
| STEP 2 | 1 | 1 | 1 | 0 | 0 | 0 | 0 | 0 |
| STEP 3 | 1 | 1 | 1 | 0 | 0 | 1 | 0 | 1 |
| STEP 4 | 0 | 0 | 1 | 1 | 1 | 0 | 0 | 0 |
| STEP 5 | 0 | 0 | 0 | 0 | 0 | 0 | 0 | 0 |

## Fig. 4A

| | CONTENTS OF EACH WORD | | | | | | | |
|---|---|---|---|---|---|---|---|---|
| W1 | 0 | 1 | 0 | 0 | 1 | 0 | 1 | 0 |
| W2 | 1 | 0 | 1 | 0 | 1 | 0 | 1 | 0 |
| W3 | 0 | 0 | 0 | 0 | 0 | 1 | 0 | 1 |
| W4 | 1 | 1 | 0 | 1 | 1 | 1 | 0 | 1 |
| OCWi | | | | | | | | |

## Fig. 4B

| OPERATION STEP | CONTENTS OF THE OPERATIONAL REGISTER 3C | | | | | | | |
|---|---|---|---|---|---|---|---|---|
| 1 | 0 | 1 | 0 | 0 | 1 | 0 | 1 | 0 |
| 2 | 1 | 1 | 1 | 0 | 0 | 0 | 0 | 0 |
| 3 | 1 | 1 | 1 | 0 | 0 | 1 | 0 | 1 |
| 4 | 0 | 0 | 1 | 1 | 1 | 0 | 0 | 0 |

# Fig. 5